Europäisches Patentamt

European Patent Office

Office européen des brevets

(11) Veröffentlichungsnummer: **0 238 077**
**B1**

## (12) EUROPÄISCHE PATENTSCHRIFT

(45) Veröffentlichungstag der Patentschrift:
08.11.89

(51) Int. Cl.⁴: **B60G 15/06**, B60G 17/06

(21) Anmeldenummer: 87104011.9

(22) Anmeldetag: 18.03.87

(54) Aufhängung eines Fahrzeugrades bzw. einer Fahrzeugachse.

(30) Priorität: 20.03.86 DE 3609497

(43) Veröffentlichungstag der Anmeldung:
23.09.87 Patentblatt 87/39

(45) Bekanntmachung des Hinweises auf die Patenterteilung:
08.11.89 Patentblatt 89/45

(84) Benannte Vertragsstaaten:
DE ES FR GB IT NL

(56) Entgegenhaltungen:
US-A- 4 265 467
US-A- 4 456 232

(73) Patentinhaber: VOLKSWAGEN AKTIENGESELLSCHAFT,
D-3180 Wolfsburg(DE)

(72) Erfinder: VOLKSWAGEN AKTIENGESELLSCHAFT,
D-3180 Wolfsburg(DE)

(74) Vertreter: Grützmann, Dieter, Dipl.-Ing. et al, c/o
Volkswagen AG Patentwesen Postfach,
D-3180 Wolfsburg 1(DE)

**Beschreibung**

Die Erfindung betrifft eine Aufhängung eines Fehrzeugrades bzw. einer Fahrzeugachse mit Feder und separat angeordnetem Dämpfer, dessen wirksamer Hubweg veränderbar ist, mit den Merkmalen des Oberbegriffs des Anspruchs 1.

Bei einer bekannten Aufhängung dieser Art (DE-C-183 951) weist der Dämpfer einen Flügelkolben auf, der in einem flüssigkeitsgefüllten, sektorförmigen Gehäuse arbeitet. Der Flügelkolben wirkt über einen Arm und einen daran mittels Stellschraube einstellbar angeordneten Lenker auf die Befestigungsklammer einer Blattfeder. Durch Verstellen des Anlenkpunktes des Lenkers am Arm läßt sich der Hubweg des Flügelkolbens im Stillstand des Fahrzeuges je nach Empfindlichkeit der Feder oder der Belastung verändern.

Bei einer bekannten Einzelradaufhängug (DE-B-27 03 651) ist der Radzapfen von einem Längslenker abgestützt, der mittels einer Drehstabfeder an einer fahrzeugfesten Konsole schwenkbar gelagert ist. Ein Dämpfer ist mit einem Ende am Radzapfen und mit dem anderen Ende an der Konsole befestigt. Aufgrund dieser Anordnung wird der wirksame Hubweg des Dämpfers abhängig von der Radeinfederung, d. h. vom Belastungszustand des Fahrzeugs, so verändert, daß der Hubweg des Dämpfers bei stärkerer Belastung des Fahrzeugs vergrößert wird.

Der Erfindung liegt die Aufgabe zugrunde, eine Aufhängung für ein Fahrzeugrad der im Oberbegriff des Anspruchs 1 beschriebenen Art so auszubilden, daß im Betrieb eine von der Einfederung des Fahrzeuges unabhängige Veränderbarkeit der Dämpfereigenschaften erzielt wird, insbesondere bei betriebsabhängiger Veränderbarkeit der Federeigenschaften.

Zur Lösung dieser Aufgabe sind gemäß der Erfindung die Merkmale des Kennzeichens des Anspruchs 1 vorgesehen.

Bei der Erfindung ist der getrennt von der Feder angeordnete Dämpfer hubveränderbar, ohne daß zwangsläufig die Federeigenschaften geändert werden. Gleichwohl ist eine unabhängige Veränderung der Federeigenschaften auch denkbar. Hierdurch läßt sich bei modernen, niveaugeregelten Fahrzeugen das Verhalten der Aufhängung insgesamt im Betrieb optimieren.

Aufgrund der Einwirkung der Stellvorrichtung auf ein äußeres Dämpferteil ist nicht erforderlich, den Dämpfer selbst zu verändern. Der Dämpfer bleibt also billig wie bisher.

Das Verhältnis von Zug- und Druckstufe im Dämpfer kann dabei erhalten bleiben.

Bei einer vorteilhaften konstruktiven Ausgestaltung der Erfindung ist vorgesehen, daß die Stellvorrichtung an einem Fußpunkt des Dämpfers angreift und daß dieser Fußpunkt über einen schwenkbaren Lenker mit einem das Fahrzeugrad bzw. die Fahrzeugachse abstützenden Bauteil, wie einer Schwinge, bzw. mit dem Fahrzeugaufbau verbunden ist.

Es ist zur selbsttätigen Verstellung der Federwirkung, d. h. zur Niveauregulierung einer Fahrzeugaufhängung, bei der die Feder auf eine das Rad tragende Schwinge wirkt, an sich bekannt, die Feder über einen Lenker mit der Schwinge zu verbinden und eine Stellvorrichtung in Form eines hydraulischen Zylinders so auf den Lenker einwirken zu lassen, daß sich der Hubweg der Feder im Betrieb verändert (DE-B-1 028 437).

Besonders eignet sich die Aufhängung nach der Erfindung zur Anwendung für Nutzfahrzeuge mit modernen Luftfederungen. Dort beträgt die Zuladung das 3- bis 5-fache des Leergewichtes. Entsprechend wird der Druck in der Luftfeder verändert. Damit das Nutzfahrzeug gleichwohl gute Fahreigenschaften beibehält, wird der Dämpferhub vergrößert. Eine Veränderung des Dämpferhubes kann aber auch abhängig vom Straßenzustand oder von der Fahrgeschwindigkeit bei gleich bleibender Belastung des Fahrzeuges sinnvoll sein.

Bei Fahrzeugen mit Niveauregelung wird die statische Ruhelage der Schwinge konstantgehalten; das gibt die Möglichkeit, eine Abhängigkeit zwischen Stellgröße und Dämpferhub für die Steuervorrichtung fest vorzugeben. Bei Fahrzeugen ohne Niveauregelung ist diese Zuordnung nicht eindeutig, sie könnte z. B. nach Maßgabe der Aufbaubeschleunigung für die Betätigung der Steuervorrichtung vorgegeben werden.

Die Erfindung ist im folgenden anhand schematischer Zeichnungen an Ausführungsbeispielen mit weiteren Einzelheiten näher erläutert. Es zeigen:

Fig. 1 eine Prinzipdarstellung einer Aufhängung gemäß der Erfindung;

Fig. 2 eine ausgeführte Konstruktion einer Aufhängung gemäß der Erfindung.

Fig. 3 eine andere Ausführung einer Aufhängung nach der Erfindung.

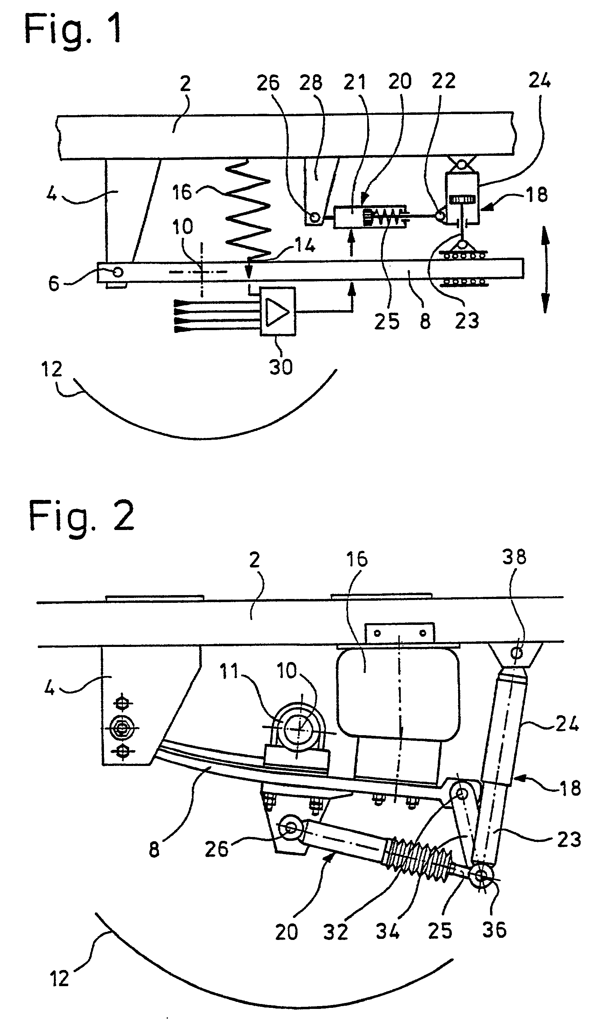

Gemäß Fig. 1 ist an eine mit dem Fahrzeugaufbau 2 fest verbundene Konsole 4 am Punkt 6 eine Schwinge 8 angelenkt. An der Schwinge 8 ist bei 10 die Radmitte eines Fahrzeugrades 12 befestigt.

Am Punkt 14 der Schwinge 8 greift eine Feder 16 an, welche die Schwinge 8 gegenüber dem Fahrzeugaufbau 2 abstützt. Ferner ist ein Dämpfer 18 zwischen der Schwinge 8 und dem Fahrzeugaufbau 2 angeordnet. Dieser Dämpfer ist mittels eines hydraulischen oder pneumatischen Stellzylinders 20 verlagerbar, der bei 22 am Mantel 24 des Dämpfers 18 zu dessen Verlagerung in Richtung weg von der oder hin zu der Konsole 4 angreift. Das andere Ende des Stellzylinders 20 ist bei 26 mit einem Ansatz 28 des Fahrzeugaufbaus 2 verbunden.

Ein Steuergerät 30 erhält als Eingangsgröße beispielsweise Daten betreffend den Einfederungszustand der Feder 16, die Belastung des Fahrzeuges, die Geschwindigkeit des Fahrzeuges, den Straßenzustand oder dgl. und ermittelt daraus und aus eingespeicherten Daten betreffend unveränderliche Konstruktionsgrößen einen zur optimalen Einstellung der Dämpferposition des Dämpfers 18 erforderlichen Druck, der in den Zylinderraum 21 des Stellzylinders 20 eingespeist wird. Selbstverständlich kann auch ein doppelt wirkender Stellzylinder 20 verwendet werden, dessen Zylinderräume beidseitig des Kolbens mit Druckmittel beaufschlagbar sind.

Bei der Ausführung nach Fig. 2 sind der Einfachheit halber gleiche Bezugszeichen wie in Fig. 1 verwendet. Das Steuergerät 30 ist hier nicht gezeigt.

In Fig. 2 ist eine für ein Nutzfahrzeug geeignete Aufhängung mit Luftfeder 16 dargestellt, die bei höherer Belastung härter gemacht werden kann. Mit anderen Worten ist das Niveau des Fahrzeugaufbaus 2 regelbar. In diesem Fall ist eine Fahrzeugachse 11 mit Radmitte 10 von der Schwinge 8 abgestützt. An einem Punkt 32 am freien Ende der Schwinge 8 ist ein Lenker 34 angelenkt, an dessen freiem Ende bei 36 die Kolbenstange 23 des Dämpfers 18 ist an einem festen Anlenkpunkt 38 am Fahrzeugaufbau 2 angelenkt. Zwischen dem Fußpunkt 36 des Dämpfers und einem Anlenkpunkt 26, welcher an der Schwinge 8 auf der Höhe der Radmitte 10 liegt, ist der Stellzylinder 20 angeordnet. Durch Ausoder Einschieben der Kolbenstange 25 des Stellzylinders werden der Lenker 34 und der Dämpfer 18 im Gegenuhrzeigersinn zur Veränderung des Dämpferhubes geschwenkt, um für den jeweiligen Fahrund Belastungszustand des Fahrzeuges die optimale Dämpferstellung zu realisieren.

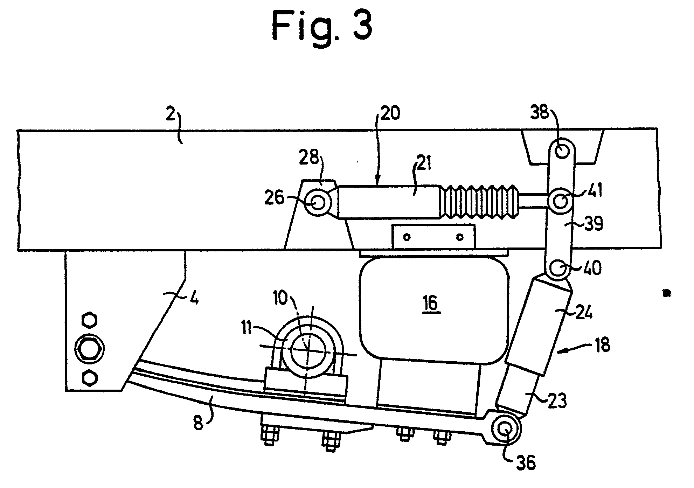

Bei der Ausführung nach Fig. 3 sind gleiche oder gleichwirkende Teile mit gleichen Bezugszeichen bezeichnet und nicht nochmals beschrieben.

Feder 16 und Dämpfer 18 sind wie bei der Ausführung nach Fig. 2 im Abstand an der Schwinge 8 angeordnet. In diesem Fall ist jedoch der Fußpunkt 36 des Dämpfers 18 direkt am freien Ende der Schwinge angelenkt. Der Kopfanlenkpunkt 40 des Dämpfers 18 ist über einen Lenker 39 mit dem Fahrzeugaufbau 2 im Anlenkpunkt 38 verbunden. Im Mittelbereich des Lenkers 39 greift über einen Anlenkpunkt 41 die Stellvorrichtung 20 an, die in diesem Fall mit ihrem anderen Ende wie bei der Prinzipdarstellung nach Fig. 1 bei 26 an einem Ansatz 28 am Fahrzeugaufbau 2 angelenkt ist. Bei dieser Konstruktion kragt der Dämpfer nicht über die Schwinge 8 hinaus nach unten zur Straßenoberfläche aus, so daß die Bodenfreiheit des Fahrzeuges nicht beeinträchtigt ist. Ferner ist die Stellvorrichtung 20 mit ihren Zuleitungen und ggf. der Steuervorrichtung bei der Konstruktion nach Fig. 3 am Fahrzeugaufbau 2 geschützt unterbringbar.

## Patentansprüche

1. Aufhängen eines Fahrzeugrades bzw. einer Fahrzeugachse mit Feder und separat angeordnetem Dämpfer, dessen wirksamer Hubweg veränderbar ist, wobei eine Stellvorrichtung (20) zur Verstellung des wirksamen Hubweges des Dämpfers (18) unabhängig vom Einfederungszustand der Feder (16) auf ein äußeres Dämpferteil (23; 24) einwirkt, dadurch gekennzeichnet, daß Feder (16) und Dämpfer (18) mit ihren einen Enden im Abstand voneinander am Fahrzeugaufbau (2) angreifen und mit ihren anderen Enden ebenfalls im Abstand voneinander an einer am Aufbau angelenkten, das Fahrzeugrad bzw. die Fahrzeugachse (12; 11) abstützenden Schwinge (8) angreifen, daß die am Fahrzeugaufbau (2) bzw. an der Schwinge (8) abgestützte Stellvorrichtung (20) auf das äußere Dämpferteil (23; 24) zur Veränderung des wirksamen Hebelarmes des Dämpfers (18) bezüglich des Anlenkpunktes (6) der Schwinge (8) einwirkt, und da die Stellvorrichtung (20) an ein Steuergerät (30) angeschlossen ist, welches die Stellvorrichtung in Abhängigkeit von Betriebsbedingungen, wie Fahrzeug- bzw. Straßenzustand, während des Betriebes betätigt.

2. Aufhängung nach Anspruch 1, dadurch gekennzeichnet, daß die Stellvorrichtung (20) an einem Fußpunkt (36; 40) des Dämpfers (18) direkt oder indirekt angreift und daß dieser Fußpunkt über einen schwenkbaren Lenker (34; 39) mit einem das Fahrzeugrad bzw. die Fahrzeugachse (11) abstützenden Bauteil (Schwinge 8) bzw. mit dem Fahrzeugaufbau (2) verbunden ist.

3. Aufhängung nach Anspruch 1 oder 2, dadurch gekennzeichnet, daß die Stellvorrichtung ein Druckmittelylinder (20) ist.

4. Anwendung einer Aufhängung nach einem der Ansprüche 1 bis 3 bei einem Fahrzeug mit einer niveauregelbaren Luftfederung (16).

5. Anwendung einer Aufhängung nach Anspruch 4 bei Nutzfahrzeugen.

## Claims

1. A suspension for a motor vehicle wheel or a motor vehicle axle, having a spring and a separately disposed damper, whose effective stroke path is adjustable, wherein an adjusting device (20) for adjusting the effective stroke path of the damper (18) independently of the state of spring compression of the spring (16) acts on an outer part (23; 24) of the damper, characterised in that one end each of the spring (16) and the damper (18) act at a distance from one another on the motor vehicle body (2) and their other ends act at a distance from one another on a swinging member (8), which is articulated to the vehicle body and which supports the vehicle wheel or vehicle axle (12; 11), the adjusting device (20), which is supported on the vehicle body (2) or on the swinging member (8), acts on the outer damper part (23; 24) to change the effective lever arm of the damper (18) with respect to the point (6) of articulation of the swinging member (8), and the adjusting device (20) is connected to a control device (30) which actuates the adjusting device during operation in dependence upon operating conditions such as vehicle and/or road condition.

2. A suspension as claimed in claim 1, characterised in that the adjusting device (20) acts either directly or indirectly on a base point (36; 40) of the damper (18) and that this base point is connected by way of a pivotable control member (34; 39) to a component (swinging member 8) which supports the vehicle wheel or the vehicle axle (11), or to the vehicle body (2).

3. A suspension as claimed in claims 1 or 2, characterised in that the adjusting device is a pressure medium cylinder (20).

4. Using a suspension as claimed in any of claims 1 to 3 in a motor vehicle having a level-controllable air suspension (16).

5. Using a suspension as claimed in claim 4 in commercial vehicles.

**Revendications**

1. Suspension d'une roue, voire d'un essieu d'un véhicule, comportant un ressort et un amortisseur qui est disposé séparément et dont le débattement utile est variable, un dispositif (20) de réglage assurant l'ajustement du débattement utile de l'amortisseur (18), indépendamment du taux de compression du ressort (16), en agissant sur une partie extérieure (23; 24) de l'amortisseur, caractérisée par le fait que des premières des extrémités du ressort (16) et de l'amortisseur (18) sont reliées, à une certaine distance l'une de l'autre, au châssis (2) du véhicule, et leurs autres extrémités sont reliées, également espacées l'une de l'autre, à un bras oscillant (8) articulé sur le châssis et portant la roue, voire l'essieu du véhicule (12; 11), et par le fait que le dispositif (20) de réglage s'appuyant sur le châssis (2) du véhicule, voire le bras oscillant (8), agit sur la partie extérieure (23; 24) de l'amortisseur, de manière à modifier le bras de levier utile compris entre l'amortisseur (18) et l'articulation (6) du bras oscillant (8), et par le fait que le dispositif (20) de réglage est raccordé à un appareil (30) de commande qui actionne le dispositif de réglage, en fonction des conditions de fonctionnement telles que l'état du véhicule ou l'état de la route, pendant le fonctionnement.

2. Suspension selon la revendication 1, caractérisée par le fait que le dispositif (20) de réglage est relié directement ou indirectement à un œil (36; 40) de fixation de l'amortisseur (18), et que cet œil de fixation est relié, par l'intermédiaire d'une biellette articulée (34; 39), à une pièce (bras oscillant 8) portant la roue, voire l'essieu (11) du véhicule, ou au châssis (2) du véhicule.

3. Suspension selon la revendication 1 ou 2, caractérisé par le fait que le dispositif de réglage est un vérin (20) à fluide sous pression.

4. Utilisation d'une suspension selon une des revendications 1 à 3 sur un véhicule pourvu d'un ressort pneumatique (16) permettant une correction d'assiette.

5. Utilisation d'une suspension selon la revendication 4 sur véhicules utilitaires.

# Fig. 1

# Fig. 2

# Fig. 3